# EUROPEAN PATENT SPECIFICATION

(11) **EP 0 434 361 B1**
(45) Date of publication and mention of the grant of the patent: **27.09.1995**
(21) Application number: 90313842.8
(22) Date of filing: 18.12.1990
(51) Int. Cl.: F23R 3/08, F23R 3/14

(54) **Combustion apparatus and combustion method therein**
Verbrennungskammer und Verbrennungsverfahren
Chambre et méthode de combustion

(30) Priority: 22.12.1989 JP 331329/89
(43) Date of publication of application: 26.06.1991
(73) Proprietor: HITACHI, LTD., Chiyoda-ku, Tokyo 100 (JP)
(72) Inventor: Iwai, Kazumi, Mito-shi (JP); Koizumi, Hiromi, Hitachi-shi (JP); Kumata, Kazuhiko, Katsuta-shi (JP); Moritomo, Yoshikazu, Hitachi-shi (JP)
(74) Representative: Paget, Hugh Charles Edward

(56) References cited:
- FR-A- 1 310 258
- FR-A- 1 540 599
- GB-A- 1 135 670
- GB-A- 1 503 921
- US-A- 2 654 996
- US-A- 3 793 827
- US-A- 3 826 082

## Description

### BACKGROUND OF THE INVENTION

The present invention relates to a combustion apparatus used, for example, in a gas turbine and also to a combustion method in such a combustion apparatus. More particularly, the present invention relates to an improvement in a combustion apparatus in which there is provided, in a liner forming a combustion chamber, with an air film forming means for protecting the liner from the hot combustion gas, as well as to a combustion method in such an improved combustion apparatus.

A combustion apparatus of this type generally used has a combustor liner which forms a combustion chamber, and in this liner there are provided with various cooling means for protecting it from the hot combustion gas.

One of such means is cooling by a film of air. According to this cooling method, air is introduced into the combustor through an air film forming means provided in the liner portion so as to always form a layer of air film on the inner wall of the liner. The air layer effectively prevents the heat in the combustion zone from reaching the liner and carries the heat away from the liner itself.

This cooling method offers a high cooling efficiency with a small quantity of air so as to effectively prevent overheating of the liner, since the air not only carries the heat away from the liner but also interrupts heat transfer to the liner, unlike a cooling method in which the heated liner is merely cooled. In addition, this method is simple in its arrangement and practical, so that it has been used widely.

In this cooling method, it is important that a uniform layer of air film is always formed over the entire area of the inner wall of the liner.

This of course requires an arrangement for forming such a uniform air film. However, what is more important is that the air film is not broken or punctured by the swirling flow of combustion gas in the combustion chamber formed by the liner. In the combustor of this type, the swirling flow is imparted to the feeding mixed gas, in order to attain a better mixing of fuel with air and to facilitate holding of the flame. Consequently, the combustion gas becomes also the swirling flow, so that the air film is broken easily by this swirling combustion gas.

In recent years, there is a trend to use low calorie fuels such as blast furnace gas or the like. When such a fuel is used, the flow rate of the fuel to be supplied is increased with the result that the diameter of a nozzle for jetting the fuel is also increased. In consequence, the size of the swirler for imparting the swirling flow to the feeding gas is increased correspondingly, so that the influence of the combustion gas flow extends to the vicinity of the liner's inner wall. Consequently, in particular, the aforesaid breaking of the air film occurs easily.

This problem would be eliminated by using a combustor liner having a greater diameter so as to reduce the influence of the combustion gas flow. Such a countermeasure, however, does not cope with the current demand for reduction in the size of the combustor liner. An increase in the liner diameter correspondingly increases the area of the liner surface which in turn requires a greater flow rate of the cooling air.

GB-A-1,135,670 discloses an arrangement of the upstream end wall of a combustion chamber in which a cooling air flow is formed through gaps between concave rings and the cooling air is guided by vanes to form a swirl in the same general direction as that of a swirling fuel gas.

US-A-2,654,996 discloses a generally cylindrical combustion chamber in which a central flame zone is formed by a jet of fuel and a helicoidal flow of insulating air is formed against the inner wall of the combustion chamber. Further insulating air can be introduced through the inner wall of the combustion chamber.

### SUMMARY OF THE INVENTION

According to a first aspect of the present invention, there is provided a method of combustion of combustible gas as specified in claim 1.

According to a second aspect of the present invention, there is provided a combustion apparatus as specified in claim 4.

According to a third aspect of the present invention, there is provided a gas turbine as specified in claim 8.

In the combustion apparatus of the present invention, since the air film is formed by the air which flows in the same direction as the swirling direction of the combustion gas, the air film tends never to be broken by the combustion gas. even if the swirling combustion gas approaches the air film. Thus, exfoliation or turbulency of the air film is suppressed, thereby increasing the cooling efficiency.

Embodiments of the invention are given by way of example in the following description in conjunction with the accompanying drawings.

### BRIEF DESCRIPTION OF THE DRAWINGS

Fig. 1 is a fragmentary perspective view of a combustor liner in an embodiment of the combustion apparatus according to the present invention;
Fig. 2 is a sectional view taken along the line II-II of Fig. 1;
Fig. 3 is a longitudinal sectional view of an embodiment of the combustion apparatus according to the present invention;
Fig. 4 is a front view of a swirler;
Fig. 5 is a longitudinal sectional view of a combustor liner;
Fig. 6 is a fragmentary perspective view of a combustor liner in another embodiment of the combustion apparatus according to the present invention;
Fig. 7 is a fragmentary perspective view of a combustor liner in a still another embodiment of the combustion apparatus according to the present invention, showing particularly a lip portion;
Fig. 8 is a longitudinal sectional view of the lip portion thereof; and
Fig. 9 is a fragmentary perspective view of a combustor liner in a further embodiment of the combustion apparatus according to the present invention.

### DESCRIPTION OF THE PREFERRED EMBODIMENTS

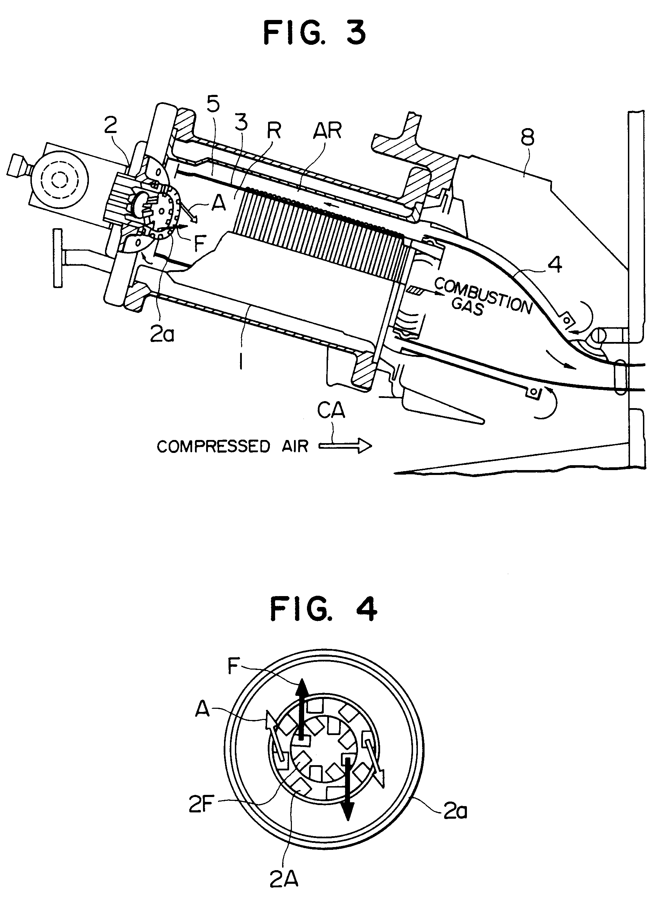

Fig. 3 shows a combustion apparatus used, for example, in a gas turbine, together with associated parts.

The combustion apparatus is composed mainly of a cover structure 1, a fuel supply means 2, a combustor liner 3 and a tail cylinder 4. The interior R of the combustor liner forms a combustion chamber.

The fuel supply means 2 is mounted on one end of the combustor liner 3, i.e., on the upstream end as viewed in the flowing direction of the combustion gas indicated by a feathered arrow, and is adapted to supply a mixed gas of a fuel F and air A into the combustion chamber R.

In order to attain a better mixing of the fuel with air and also to stabilize the flame, a swirler 2a is provided on the outlet end of the fuel supply means 2 so as to impart a swirling flow to the mixed gas.

Fig. 4 is a front view of the fuel nozzle having the swirler 2a. In this case, the fuel nozzle has eight fuel ports 2F from which the fuel F is jetted at a predetermined angle with respect to the axis of the fuel nozzle. Consequently, the fuel F is directed towards the downstream in the form of a swirling flow. Similarly, air is jetted from air ports 2A at a predetermined angle with respect to the axis so as to form a swirling flow. In the illustrated embodiment, the fuel ports 2F and the air ports 2A are arranged at different radial positions. This, however, is not exclusive and these ports may be arranged on the same circle, i.e., at the same radius from the center of the nozzle.

Referring again to Fig. 3, the combustor liner 3 forming the combustion chamber R has a cylindrical form extending in the direction of the combustion gas flow, and is arranged in the covering structure 1 with a predetermined gap being kept between itself and the inner wall of the covering structure. This gap forms a passage AR for cooling air.

The liner is subjected to heat of the combustion gas, so that it is heated up to a high temperature during operation. The liner is therefore provided on the inner surface thereof with a cooling means.

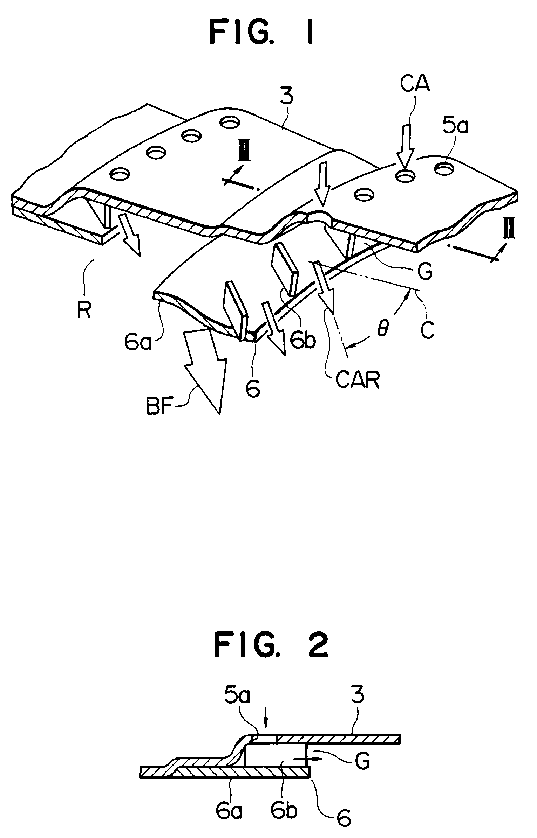

The construction of this cooling means 5 will be described with reference to Fig. 1.

Fig. 1 is a fragmentary sectional perspective view of the wall of the combustor liner. As will be seen from this Figure, the combustor liner 3 has cooling air supply ports 5a which penetrate the wall thereof, and is provided inside thereof with lips 6a.

As will be seen from Fig. 1, the configuration of the lip 6a and the positional relationship between the lip 6a and the cooling air supply ports 5a are set such that each lip 6a is disposed inside each row of the cooling air supply ports 5a and the downstream side of each lip 6a is unsupported, so that a small gap G serving as air outlet is formed between the downstream side of the lip 6a and the inner wall of the combustor liner 3.

As will be described later, cooling air which is jetted through this air outlet gap G forms a film of cooling air which effectively prevents the combustor liner from becoming hot.

Further, as will be seen from Fig. 1, a plurality of protrusions 6b are provided on the surface of the lip 6a so as to project into the outlet gap G and to extend toward the downstream side at an angle ϑ with respect to the axis C of the combustor liner 3.

The inclination angle ϑ of the protrusions 6b with respect to the liner axis C is set such that the cooling air jetted from the outlet gap G is directed in the same direction as the flowing direction of the combustion gas formed by the swirler 2a.

The lips 6a, cooling air supply ports 5a and the protrusions 6b in cooperation form an air film forming means 6.

The operation of the combustion apparatus constructed in this manner is as follows.

Referring to Fig. 3, compressed air CA is introduced into an impeller housing 8 formed around the tail cylinder 4 and here its pressure is recovered. The air of the increased pressure then flows through the space around the tail cylinder 4 and the combustor liner 3 towards the upstream side, i.e., towards the fuel supply means, and is introduced into the combustion chamber R. The air introduced into the combustion chamber is divided into at least two flows as mentioned below.

That is, one flow is introduced, as the film of cooling air, through the small outlet gap G formed between the combustor liner 3 and the lips 6a. The other flow is introduced, as the combustion air, from the swirler 2a of the fuel supply means 2.

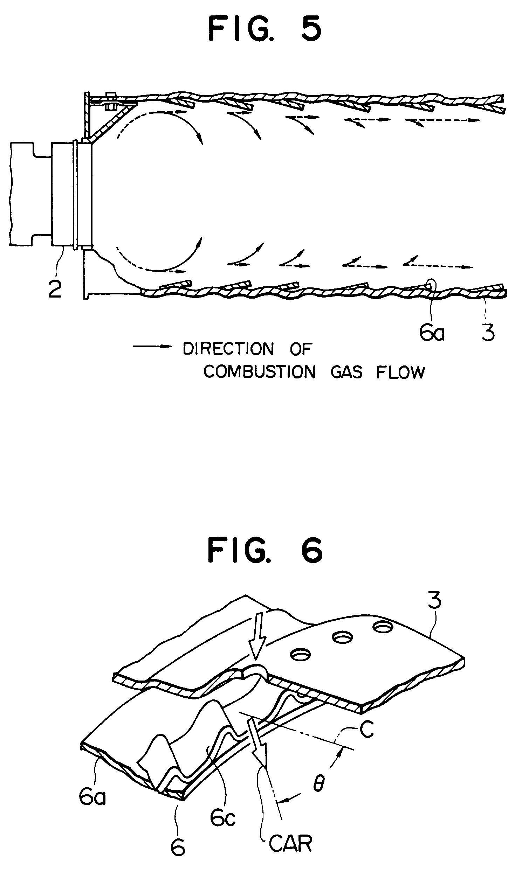

Needless to say, the combustion air flows into the combustion chamber after being mixed with the fuel. Also in this case, as explained before, since both the combustion air and the fuel are supplied through the swirler at an angle with respect to the axis C of the liner, the mixed gas forms a swirl which progressively moves in the liner towards the downstream side while burning. This state is indicated by solid-line arrows in Fig. 5.

Further, the flow of the combustion gas is also indicated by a large arrow BF in Fig. 1. Incidentally, a small arrow CAR in Fig. 1 indicates the flow of the film forming air which is important for the present invention. Thus, the air jetted from the air film forming means 6 is deflected by the protrusions 6b so as to flow into the combustion chamber R at the inclination angle ϑ with respect to the liner axis C.

In this case, since this inclination angle ϑ is set to direct the cooling air in the same direction as the direction BF of the swirling combustion gas flow, the cooling air CAR flows in the same direction as the combustion gas, so that the flow of the film forming air is not disturbed or stirred by the combustion gas. Therefore, the film forming air can stably form a uniform film of cooling air without being affected by the flow of the combustion gas, even if the diameter of the combustor liner 3 is small.

In the embodiment described hereinbefore, the protrusions 6b on the lips 6a are used for deflecting the flow of the film forming air in the same direction as the flowing direction of the combustion gas. This arrangement, however, is not exclusive and the same effect is produced when, as shown in Fig. 6, a corrugated plate 6c having inclined corrugations is interposed between each lip 6a and the combustor liner 3. In such a case, the corrugations of the corrugated plate 6c are inclined to direct the cooling air in the same direction as the flowing direction of the combustion gas.

It will be understood that the arrangement shown in Fig. 6 produces the same effect as that produced by the first embodiment described in connection with Figs. 1 to 5. The arrangement shown in Fig. 6 also offers an additional advantage over the first embodiment. In the first embodiment, the flow of the cooling air is slightly broken by the protrusions 6b, so that the film of the cooling air tends to become discontinuous in the circumferential direction. In contrast, in the embodiment shown in Fig. 6, variation in the flow velocity of the cooling air takes place in the thicknesswise direction of the air film, so that the breakage penetrating the cooling air film does not occur, thereby making it possible to form the air film which is more sufficient than that formed by the former embodiment.

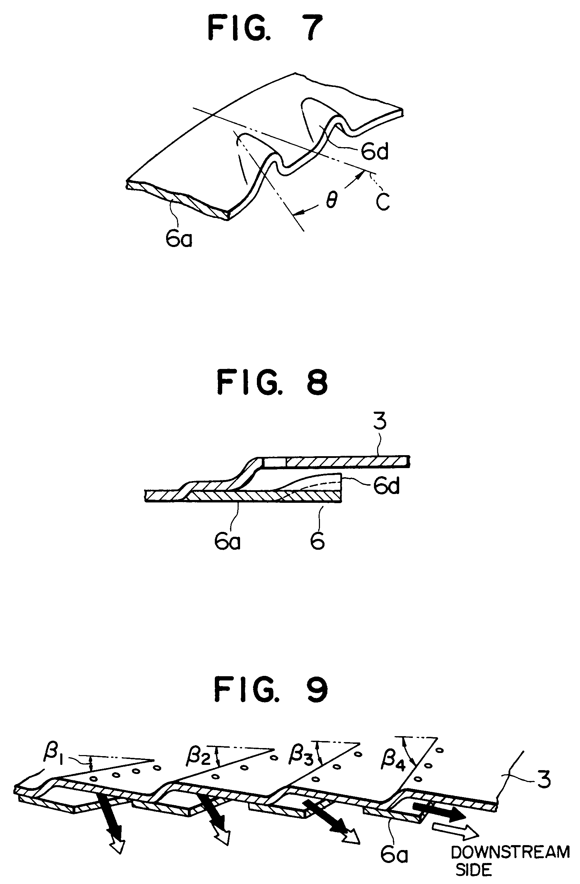

Fig. 7 shows a still another embodiment in which the lips 6a itself are formed to have integral protrusions 6d, unlike the first embodiment in which the protrusions 6b are formed as separate members. More specifically, these protrusions 6d are formed on the outlet side of the lip 6a, with their axes being inclined at the angle ϑ with respect to the axis C of the combustor liner 3. It will be understood that these protrusions 6d serve to direct the flow of the cooling air in the same direction as the swirling direction of the combustion gas.

Thus, the embodiment shown in Fig. 7 offers the same advantages as those produced by the preceding embodiments. In addition, the arrangement shown in Fig. 7 can easily be attained only by pressing the lip 6a. Accordingly, the production process is simplified because there is no need to attach the separate members such as the protrusions 6b in the first embodiment or the corrugated plate 6c in the second embodiment, and the lip itself becomes robust owing to the protrusions 6d.

Although various air film forming means have been described, these are only illustrative, and various other measures can be taken such as to modify the through-holes, i.e., the cooling air supply ports formed in the combustor liner, so as to jet the cooling air in a desired direction or to suitably vary the circumferential pitch and the number of the protrusions thereby attaining good balance and distribution of the cooling air.

In the described embodiments, the air film forming means is so constructed as to direct the air at a certain inclination angle with respect to the axis of the liner. This angle, however, may be varied along the length of the combustor liner.

The spiral pitch of the swirl of the combustion gas in the combustor liner is not constant. Namely, the pitch of the swirl of the combustion gas progressively increases towards the downstream side. In other words, the angle of the spiral form of the swirl progressively decreases towards the downstream side of the combustor liner.

It is therefore most preferable that the air film forming means is so constructed that, as shown in Fig. 9, the jetting angle of the cooling air is progressively and gently decreased towards the downstream side of the combustor liner. That is, Fig. 9 shows an embodiment in which the lip 6a has a spiral form, and a symbol β₁ represents the inclination angle of the combustion gas with respect to the axis of the combustor liner at its upstream side. The inclination angle β then progressively changes to β₂, β₃, β₄ and so on towards the downstream side of the combustor liner so as to meet the condition of β₁ < β₂ < β₃ < β₄. Needless to say, the angle β becomes 90° finally.

The cooling air is jetted from each of the lips 6a so as to flow along the wall of the liner. In this case, the direction (black arrow) of the cooling air jetted from the lip 6a is set to be (90°-β) so as to become the same as the direction (white arrow) of the circumferential flow component of the combustion gas.

According to this arrangement, the direction of the film forming cooling air jetted from the lip substantially coincides with the direction of the main flow component of the combustion gas in the vicinity of the liner wall over the entire axial length of the liner. Thus, the film forming air flows substantially in parallel with the swirl of the combustion gas over the entire length of the combustor liner, thereby minimizing the disturbance of the film of the cooling air by the combustion gas, as well as mixing of the cooling air with the combustion gas. Consequently, the temperature rise of the combustor liner is effectively suppressed, particularly at the downstream side of each lip, i.e., at the upstream side of the next lip.

As has been described, according to the present invention, the air film forming means is so constructed that the flowing direction of the cooling air forming the air film becomes the same direction as the swirling direction of the combustion gas. Therefore, the film of the cooling air is not broken by the flow of the combustion gas even if the swirling combustion gas reaches the same region as the film of cooling air, so that it possible to obtain a combustor liner of this type in which the cooling air film is difficult to be broken, without increasing the diameter of the combustor liner.

## Claims

1. A method of combustion of combustible gas in a combustion zone within a combustion chamber bounded by a generally cylindrical axially extending combustor liner wall (3) , said method including:
forming a swirling flow of combustion gas in said combustion zone, and at the same time passing air through air passing means formed on the generally cylindrical combustor liner wall (3) into the combustion chamber;
whereby said air is passed through said combustor liner wall (3) as cooling air in the form of an air film flowing along the generally cylindrical inner peripheral surface of the combustor liner wall (3) to protect said combustor liner wall (3) from the swirling flow of combustion gas, and said air passing means includes lips (6a) arranged on the inner wall of said combustor liner (3) with a predetermined gap (G) therefrom, and protrusions (6b;6c;6d) provided between said lips (6a) and the inner wall of said combustor liner (3) and being capable of deflecting the cooling air in a predetermined direction so that at each location of its passage through said combustor liner wall (3) said cooling air is guided to flow in the same direction as the direction of said swirling flow of combustion gas at the respective location.

2. A method of claim 1, wherein combustible gas supplying means (2) is provided on one end of said combustor liner (3) and adapted to supply the combustible gas into said combustion chamber, and a swirler (2a) is provided on the outlet end of said combustible gas supplying means (2) and adapted to impart a swirling flow to said combustible gas.

3. A method of claim 1 or claim 2, in which the combustion is effected by supplying a premixed air-fuel flow in a swirling manner into said combustion chamber.

4. A combustion apparatus comprising:
a generally cylindrical combustor liner wall (3) defining a combustion zone in a combustion chamber;
means (5a,6a,6b;6c;6d) provided at the generally cylindrical combustor liner wall (3) for passing air into said combustion zone through said combustor liner wall (3);
combustible gas supplying means (2,2a) provided at an upstream end of said combustor liner wall (3) and adapted to supply combustible gas into said combustion chamber to form a swirling flow of combustion gas;
said air passing means (5a,6a,6b;6c;6d) being arranged to discharge the air through said generally cylindrical combustor liner wall (3) as cooling air in the form of an air film flowing along the generally cylindrical inner peripheral surface of the combustor liner wall (3) to protect said combustor liner wall (3) from said swirling flow of combustion gas, and said air passing means including lips (6a) arranged on the inner wall of said combustor liner (3) with a predetermined gap (G) therefrom; characterised in that protrusions are (6b;6c;6d) provided between said lips (6a) and the inner wall of said combustor liner (3) which are capable of deflecting the cooling air in a predetermined direction at each location of air passing through said combustor liner wall (3) so as to guide the cooling air to flow in the same direction as the direction of the swirling flow of combustion gas at the respective location.

5. A combustion apparatus according to claim 4, wherein said protrusions (6d) are formed by curving and protruding said lip (6a).

6. A combustion apparatus according to claim 4, wherein said protrusions are formed by interposing between said lip (6a) and the inner wall of said combustor liner (3) a corrugated plate (6c) having inclined corrugations.

7. A combustion apparatus of any one of claims 4 to 6, wherein the angle of said flowing direction of the cooling air with respect to the axis of said combustor liner (3) is progressively decreased towards the downstream side of said combustor liner.

8. A gas turbine having a combustion apparatus of any one of claims 4 to 7.

## Patentansprüche

1. Verfahren zum Verbrennen brennbaren Gases in einer Verbrennungszone innerhalb einer Verbrennungskammer, die von einer im wesentlichen zylindrischen, sich axial erstreckenden Verbrennungseinrichtung-Auskleidungswand (3) umschlossen wird, wobei das Verfahren folgendes umfaßt:
- Erzeugen einer Wirbelströmung von Verbrennungsgas in der Verbrennungszone und gleichzeitiges Durchleiten von Luft durch eine Luftdurchleiteinrichtung, die an der im wesentlichen zylindrischen Verbrennungseinrichtung-Auskleidungswand (3) ausgebildet ist, in die Verbrennungskammer;
- wobei die Luft als Kühlluft in der Form eines Luftfilms, der entlang der im wesentlichen zylindrischen Innenumfangsfläche der Verbrennungseinrichtung-Auskleidungswand (3) strömt, durch die Verbrennungskammer-Auskleidungswand (3) hindurchgeleitet wird, um diese Verbrennungseinrichtung-Auskleidungswand (3) gegen die Wirbelströmung des Verbrennungsgases zu schützen, und die Lufthindurchführeinrichtung Lippen (6a), die an der Innenwand der Verbrennungseinrichtung-Auskleidung (3) mit einem vorgegebenen Abstand (G) zu dieser angeordnet sind, und Vorsprünge (6b; 6c; 6d) aufweist, die zwischen diesen Lippen (6a) und der Innenwand der Verbrennungseinrichtung-Auskleidung (3) vorhanden sind und die Kühlluft in einer vorgegebenen Richtung so ablenken können, daß diese Kühlluft an jedem Ort ihres Hindurchleitens durch die Verbrennungseinrichtung-Auskleidungswand (3) so geführt wird, daß sie in einer Richtung strömt, die mit der Richtung der Wirbelströmung des Verbrennungsgases am jeweiligen Ort übereinstimmt.

2. Verfahren nach Anspruch 1, bei dem eine Verbrennungsgas-Zuführeinrichtung (2) an einem Ende der Verbrennungseinrichtung-Auskleidung (3) vorhanden ist und so ausgebildet ist, daß sie das brennbare Gas in die Verbrennungskammer einleitet, und ein Verwirbler (2a) am Auslaßende der Verbrennungsgas-Zuführeinrichtung (2) vorhanden ist und so ausgebildet ist, daß er dem Verbrennungsgas eine Wirbelströmung verleiht.

3. Verfahren nach Anspruch 1 oder Anspruch 2, bei dem die Verbrennung dadurch herbeigeführt wird, daß eine Strömung aus einem vorgemischten Luft-Brennstoff-Gemisch in verwirbelnder Weise in die Brennkammer geleitet wird.

4. Verbrennungsanordnung mit:
- einer im wesentlichen zylindrischen Verbrennungseinrichtung-Auskleidungswand (3), die eine Verbrennungszone in einer Verbrennungskammer festlegt;
- einer Einrichtung (5a, 6a, 6b; 6c; 6d), die an der im wesentlichen zylindrischen Verbrennungseinrichtung-Auskleidungswand (3) vorhanden ist, um Luft durch die Verbrennungseinrichtung-Auskleidungswand (3) in die Verbrennungszone zu leiten;
- einer Verbrennungsgas-Zuführeinrichtung (2, 2a), die am stromaufwärtigen Ende der Verbrennungseinrichtung-Auskleidungswand (3) vorhanden ist und so ausgebildet ist, daß sie brennbares Gas in die Verbrennungskammer leitet, um eine Wirbelströmung des Verbrennungsgases zu erzeugen;
- wobei die Luftdurchleiteinrichtung (5a, 6a, 6b; 6c; 6d) so ausgebildet ist, daß sie die Luft durch die im wesentlichen zylindrische Verbrennungseinrichtung-Auskleidungswand (3) hindurch als Kühlluft in Form eines Luftfilms ausgibt, der entlang der im wesentlichen zylindrischen Innenumfangsfläche der Verbrennungseinrichtung-Auskleidungswand (3) strömt, um diese Verbrennungseinrichtung-Auskleidungswand (3) vor der Wirbelströmung des Verbrennungsgases zu schützen, und wobei die Luftdurchleiteinrichtung Lippen (6a) aufweist, die an der Innenwand der Verbrennungseinrichtung-Auskleidung (3) mit einem vorgegebenen Abstand (G) zu dieser angeordnet sind; **dadurch gekennzeichnet,** daß zwischen den Lippen (6a) und der Innenwand der Verbrennungseinrichtung-Auskleidung (3) Vorsprünge (6b; 6c; 6d) vorhanden sind, die die Kühlluft an jedem Ort, an dem Luft durch die Verbrennungseinrichtung-Auskleidungswand (3) tritt, in einer vorgegebenen Richtung ablenken können, um die Kühlluft so zu führen, daß sie in einer Richtung strömt, die mit der Richtung der Wirbelströmung des Verbrennungsgases am jeweiligen Ort übereinstimmt.

5. Verbrennungsanordnung nach Anspruch 4, bei der die Vorsprünge (6d) durch Einbiegen und Hochbiegen der Lippe (6a) ausgebildet sind.

6. Verbrennungsanordnung nach Anspruch 4, bei der die Vorsprünge dadurch ausgebildet sind, daß zwischen die Lippe (6a) und die Innenwand der Verbrennungseinrichtung-Auskleidung (3) eine geriffelte Platte (6c) mit schrägen Riffelungen eingefügt ist.

7. Verbrennungsanordnung nach einem der Ansprüche 4 bis 6, bei der der Winkel der Strömungsrichtung der Kühlluft in bezug auf die Achse der Verbrennungseinrichtung-Auskleidung (3) zur stromabwärtigen Seite der Verbrennungseinrichtung-Auskleidung fortschreitend abnimmt.

8. Gasturbine mit einer Verbrennungsanordnung nach einem der Ansprüche 4 bis 7.

## Revendications

1. Procédé de combustion d'un gaz combustible dans une zone de combustion à l'intérieur d'une chambre de combustion délimitée par une paroi revêtue (3) de brûleur généralement cylindrique, s'étendant axialement, ledit procédé incluant les étapes consistant à :
former un flux tourbillonnaire de gaz de combustion dans ladite zone de combustion et à faire passer en même temps de l'air à travers un moyen de passage d'air formé sur la paroi revêtue de brûleur (3) généralement cylindrique dans la chambre de combustion;
où on fait passer ledit air à travers ladite paroi revêtue de brûleur (3) comme air de refroidissement sous la forme d'un film d'air s'écoulant le long de la surface périphérique intérieure généralement cylindrique de la paroi revêtue de brûleur (3) pour protéger ladite paroi revêtue de brûleur (3) du flux tourbillonnaire de gaz de combustion, et ledit moyen de passage d'air inclut des lèvres (6a) agencées sur la paroi intérieure dudit revêtement de brûleur (3) avec un espace prédéterminé (G) relativement à celle-ci, et des saillies (6b; 6c; 6d) prévues entre lesdites lèvres (6a) et la paroi intérieure dudit revêtement de brûleur (3) et apte à dévier l'air de refroidissement dans une direction prédéterminée de façon qu'à chaque endroit de son passage à travers ladite paroi revêtue (3) de brûleur, ledit air de refroidissement est guidé pour s'écouler dans la même direction que la direction dudit flux tourbillonnaire de gaz de combustion à l'endroit respectif.

2. Procédé selon la revendication 1, dans lequel un moyen d'amenée (2) de gaz de combustion est prévu à une extrémité dudit revêtement de brûleur (3) et est apte à fournir le gaz combustible dans ladite chambre de combustion, et un élément générateur de tourbillons (2a) est prévu à l'extrémité de sortie dudit moyen d'amenée de gaz de combustion (2) et est apte à impartir un flux tourbillonnaire audit gaz combustible.

3. Procédé selon la revendication 1 ou la revendication 2, dans lequel la combustion est effectuée en amenant un flux d'air et de combustible mélangé préalablement suivant une manière tourbillonnaire dans ladite chambre de combustion.

4. Appareil de combustion comprenant :
une paroi revêtue de brûleur (3) généralement cylindrique définissant une zone de combustion dans une chambre de combustion;
un moyen (5a, 6a, 6b, 6c, 6d) prévu à la paroi revêtue de brûleur généralement cylindrique (3) pour faire passer l'air dans ladite zone de combustion à travers ladite paroi revêtue de brûleur (3);
un moyen d'amenée de gaz combustible (2, 2a) prévu à une extrémité amont de ladite paroi revêtue de brûleur (3) et conçu pour fournir du gaz combustible dans ladite chambre de combustion pour former un flux tourbillonnaire de gaz de combustion;
ledit moyen de passage d'air (5a, 6a, 6b; 6c; 6d) étant agencé pour évacuer l'air à travers ladite paroi revêtue de brûleur généralement cylindrique (3) comme air de refroidissement sous la forme d'un film d'air s'écoulant le long de la surface périphérique intérieure généralement cylindrique de la paroi revêtue de brûleur (3) pour protéger ladite paroi revêtue de brûleur (3) contre ledit flux tourbillonnaire de gaz de combustion, et ledit moyen de passage d'air incluant des lèvres (6a) agencées sur la paroi intérieure dudit revêtement de brûleur (3) avec un espace prédéterminé (G) relativement à celle-ci; caractérisé en ce que des saillies (6b; 6c; 6d) sont prévues entre lesdites lèvres (6a) et la paroi intérieure dudit revêtement de brûleur (3) qui sont aptes à dévier l'air de refroidissement dans une direction prédéterminée à chaque endroit où l'air passe à travers ladite paroi revêtue de brûleur (3) de façon à guider l'air de refroidissement pour qu'elle s'écoule dans la même direction que la direction du flux tourbillonnaire du gaz de combustion à l'endroit respectif.

5. Appareil de combustion selon la revendication 4, dans lequel lesdites saillies (6d) sont formées en ce que lesdites lèvres (6a) sont courbées et en saillie.

6. Appareil de combustion selon la revendication 4, dans lequel lesdites saillies sont formées en interposant entre lesdites lèvres (6a) et la paroi intérieure dudit revêtement de brûleur (3) une plaque ondulée (6c) ayant des ondulations inclinées.

7. Appareil de combustion selon l'une des revendications 4 à 6, dans lequel l'angle de ladite direction d'écoulement de l'air de refroidissement relativement à l'axe dudit revêtement de brûleur (3) diminue progressivement vers le côté aval dudit revêtement de brûleur.

8. Turbine à gaz ayant un appareil de combustion selon l'une des revendications 4 à 7.
